# EUROPÄISCHE PATENTSCHRIFT

(11) **EP 1 506 706 B1**
(45) Veröffentlichungstag und Bekanntmachung des Hinweises auf die Patenterteilung: **13.02.2008**
(21) Anmeldenummer: 04019033.2
(22) Anmeldetag: 11.08.2004
(51) Int. Cl.: A01G 3/06, B25F 5/00

(54) **Handhaltbares Gerät mit elektromotorischem Antrieb**
Handheld device with electric drive
Dispositif portatif entraîné par moteur électrique

(30) Priorität: 14.08.2003 DE 10337355
(43) Veröffentlichungstag der Anmeldung: 16.02.2005
(73) Patentinhaber: GARDENA Manufacturing GmbH, 89079 Ulm (DE)
(72) Erfinder: Kohl, Peter, 89257 Illertissen (DE); Schneider, Regina, 89250 Senden (DE)

(56) Entgegenhaltungen:
- US-A- 3 759 020
- US-A- 3 861 127
- US-A- 4 207 675
- US-A- 4 707 921

## Beschreibung

Die Erfindung betrifft ein handhaltbares Gerät mit elektromotorischem Antrieb, welches eine erste in ein Gerätegehäuse integrierte Schalteranordnung zum Starten des Antriebs aufweist und zusätzlich eine Stielaufnahme zum lösbaren Einsetzen eines Stiel besitzt. An einer von der Stielaufnahme entfernten Position des Stiels ist eine zweite Schalteranordnung vorgesehen, mittels welcher der Antrieb des Geräts gestartet werden kann. Ein solches Gerät kann beispielsweise eine Heckenschere, Strauchschere oder Grasschere mit optionalem Verlängerungsstiel sein. Eine solche Grasschere ist aus US-A-3 861 127 bekannt.

Das Starten des Geräts kann bei in die Stielaufnahme eingesetztem Stiel sowohl über die erste als auch über die zweite Schalteranordnung möglich sein. In anderer Ausführung kann aus Sicherheitsüberlegungen, insbesondere bei schneidend arbeitenden Geräten wie z.B. die beispielhaft genannten Garten-Schneidgeräten vorgesehen sein, dass bei in die Stielaufnahme des Gerätegehäuses eingesetztem Stiel das Starten des Antriebs nur durch die zweite Schalteranordnung, nicht aber durch die erste Schalteranordnung möglich ist.

Der vorliegenden Erfindung liegt die Aufgabe zugrunde, ein handhaltbares Gerät mit zwei derart verknüpften Schalteranordnungen unter Sicherheitsaspekten vorteilhaft weiterzubilden .

Die Erfindung ist im Patentanspruch 1 beschrieben. Die abhängigen Ansprüche enthalten vorteilhafte Ausgestaltungen und Weiterbildungen der Erfindung.

Wesentlicher Aspekt der vorliegenden Erfindung ist, dass ein für den Benutzer überraschendes Starten des Antriebs des Geräts, welches durch eine Schreckreaktion des Beinutzers oder in anderer Weise zu einer Verletzung des Benutzers führen könnte, weitgehend vermieden wird. Hierfür ist vorgesehen, dass nicht nur ein Starten des Geräts durch Betätigen der ersten Schaltanordnung bei eingesetztem Stiel verhindert ist, sondern dass auch eine solche Startsperre bei unverändert betätigter erster Schalteranordnung nicht durch das Entnehmen des Stiels aufgehoben werden kann.

Dem liegt die Vorstellung zugrunde, dass ein Benutzer bei eingesetztem Stiel versuchen könnte, den Antrieb durch Betätigung der ersten, in das Gerätegehäuse integrierten Schaltanordnung zu starten. Nachdem das Gerät nicht startet, erinnert sich der Benutzer an die Verknüpfung der Schalteranordnungen und daran, dass zum Starten des Geräts über die erste Schalteranordnung der Stiel entnommen werden muss. Hält er mit einer Hand das Gerätegehäuse fest und dabei die erste Schalteranordnung weiter betätigt, während er mit der anderen Hand den Stiel aus der Aufnahme entnimmt, kann der Start des Geräts mit Entfernen des Stiels für den Benutzer überraschend sein. Zur Verhinderung eines solchen überraschenden Starts sind erfindungsgemäß Steuereinrichtungen vorgesehen, welche die erste Schalteranordnung mit der eingesetzten Position des Stiels verknüpfen und ausgehend von der geschilderten Situation mit betätigter erster Schalteranordriung und eingesetztem Stiel einen Start des Antriebs über die erste Schatteranordnung erst ermöglichen, nachdem sowohl der Stiel entfernt als auch die erste Schaltäranordnung losgelassen und bei entferntem Stiel erneut betätigt wurde.

Unter Betätigung der ersten Schalteranordhung sei hierbei eine Krafteinwirkung, auf ein Betätigungselement der Schalteranordnung, typischerweise ein Druckschalter oder Schiebeschalter, durch die Hand des das Gerät haltenden Benutzers in Richtung der Startstellung der ersten Schalterstellung verstanden. Eingeschlossen sei hierbei, dass das Betätigungselement der ersten Schalteranordnung bei in die Stielaufnahme eingesetztem Stiel aus seiner der Stilllegung des Antriebs entsprechenden Ruhestellung nicht oder nur in eine Zwischenstellung oder bis zu der dem Start des Antriebs entsprechenden Endstellung verlagerbar ist.

Für die Ausgestaltung solcher Steuereinrichtungen sind unterschiedliche Ausführungen möglich.

Eine erste Ausführung sieht vor, dass die Steuereinrichtungen durch erste Mittel ein Entfernen des Stiels aus der Stielaufnahme verhindern, solange die erste Schalteranordnung durch den Benutzer betätigt ist. Solche Steuereinrichtungen sind vorzugsweise mechanisch realisiert, insbesondere durch bei betätigter erster Schalteranordnung formschlüssiges Eingreifen von mit der ersten Schalteranordnung verbundenen Strukturen in Gegenstrukturen des Stiels oder der Stielaufnahme. Realisierungsformen einer solchen Sperre gegen das Entfernen des Stiels bei betätigter erster Schalteranordnung sind dem Fachmann an sich geläufig.

Für den Start des Antriebs des Geräts ist dann ausgehend von bei eingesetztem Stiel betätigter erster Schalteranordnung erforderlich, das Betätigungselement der ersten Schalteranordnung loszulassen, den Stiel zu entnehmen und danach die erste Schalteranordnung erneut zu betätigern.

In anderer vorteilhafter Ausführung kann vorgesehen sein, dass die Steuereinrichtungen Mittel, im folgenden zur Unterscheidung von den bereits genannten ersten Mitteln auch als zweite Mittel oder Sperrmittel bezeichnet, enthalten, welche die Verlagerung eines Betätigungselements der ersten Schalteranordnung aus einer bei eingesetztem Stiel einnehmbaren Zwischenstellung in eine dem Start des Antriebs entsprechende Endstellung sperren und/oder welche einen über die erste Schalteranordnung schließbaren Strompfad sperren und erst nach Loslassen der zuvor betätigten ersten Schalteranordnung diese Sperre aufheben, wobei in dieser Ausführung ein Entnehmen der Stiels aus der Stielaufnahme bei betätigter erster Schalterstellung zulässig sein kann. Durch erneutes Betätigen der ersten Schalteranordnung bei entferntem Stiel kann der Antrieb gestartet werden

Die zweiten Mittel oder Sperrmittel können beispielsweise mechanischer Art sein und bei eingesetztem Stiel eine Sperrstellung einnehmen, in welcher sie bei betätigter erster Schalteranordnung auch bei Entfernen des Stiels aus der Stielaufnahme gehalten werden, aus welcher sie jedoch bei entferntem Stiel und losgelassenem Betätigungselement der ersten Schalteranordnung in eine Ausgangsstellung zurückkehren, vorzugsweise unter dem Einfluss einer Rückstellkraft, insbesondere einer Federkraft.

In einer ersten Ausgestaltung können die mechanischen Sperrmittel z.B. eine Verlagerung eines Betätigungselements der ersten Schalteranordnung aus einer durch Betätigung bei eingesetztem Stiel eingenommenen Zwischenstellung in eine dem Start des Antriebs entsprechende Endstellung sperren. In anderer Realisierungsform können die mechanischen Sperrmittel zwischen Kontaktelemente eingreifen und deren zum Schließen eines Stromkreises erforderliche Relativbewegung aufeinander zu sperren und das Schließen eines elektrischen Kontakts verhindern.

Die mechanischen Sperrmittel können bei unveränderter Betätigung der ersten Schalteranordnung in der Sperrstellung unter dem Einfluss der Betätigungskraft kraftschlüssig gehalten sein, z.B. durch korrespondierende Haltestrukturen von Sperrmitteln und Betätigungselement der ersten Schalteranordnung, welche erst bei Loslassen des Betätigungselements und dessen Rückkehr in die Ruhestellung außer Eingriff treten und die Sperrmittel zur Rückkehr in deren Ausgangsstellung freigeben.

Die Steuereinrichtungen können auch elektrische oder elektronische Mittel enthalten, welche Einsetzposition des Stiels und Stellung des Betätigungselements in elektrischer Form logisch verknüpfen und den Start des Antriebs nur freigeben, wenn die erste Schatteranordnung bei entnommenem Stiel aus der Ruhestellung des Betätigungselements betätigt wird.

Unterschiedliche Varianten zur Verhinderung des unerwarteten Startens des Antriebs können auch gemeinsam realisiert sein

Die Erfindung ist nachfolgend anhand eines bevorzugten Ausführungsbeispiels unter Bezugnahme auf die Abbildungen noch eingehend veranschaulicht. Dabei
Fig 1 eine erste Schalteranordnung in einem Gerätegehäuse ohne Verlängerungsstiel
Fig. 2 die Anordnung nach Fig. 1 mit Verlängerungsstiel.

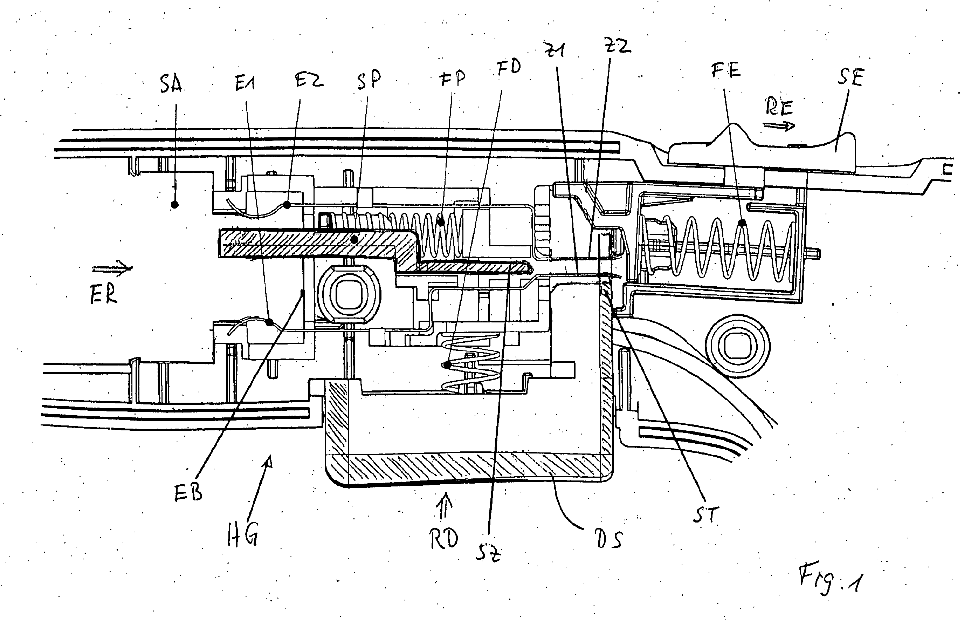

Bei dem in Fig. 1 skizzierten Schnittbild durch einen Gehäuseabschnitt eines handhaltbaren Geräts sind im gewählten Ausschnitt u.a. eine erste Schalteranordnung und eine Stielaufnahme im Bereich eines Handgriffs HG des Gehäuses dargestellt.

Die erste Schalteranordnung umfasst insbesondere einen Druckschalter DS mit einem Schaltsteg ST sowie eine erste Kontaktzunge Z1 und eine zweiter Kontaktzunge Z2 einer Kontaktanordnung. Der Druckschalter DS ist in einer Ruhestellung gezeichnet, aus welcher er durch Einwirkung einer Betätigungskraft von einer den Handgriff fassenden Benutzerhand entgegen der Federkraft einer Schaltfeder FS in Pfeilrichtung RD in den Handgriff eingedrückt werden kann. Beim Eindrücken des Druckschalters drückt ein an diesem ausgebildeter Schaltsteg auf die erste Kontaktzunge Z1, welche durch elastische Verformung aus der skizzierten Ruhestellung in Richtung der zweiten Kontaktzunge Z2 verlagerbar ist. Um den Druckschalter durch Handbetätigung eindrücken zu können, muss zuvor in gebräuchlicher Art ein Sicherungselement SE entgegen der Rückstellkraft einer Feder FE in Pfeilrichtung RE verschoben werden.

Beim Eindrücken des Druckschalters DS in den Handgriff werden über den Schaltsteg die beiden Kontaktzungen Z1, Z2 in Kontakt miteinander gebracht und durch Beibehaltung der Betätigungskraft aneinander gedrückt. Über die aneinander anliegenden Kontaktzungen wird ein elektrischer Strompfad zwischen einer Stromquelle, vorzugsweise einem im Gerätegehäuse enthaltenem Akkumulator-Paket, und dem elektrischen Motor des Geräteantriebs geschlossen und der Antrieb gestartet. Nach Loslassen des Druckschalters durch Verringerung oder Wegfall der Betätigungskraft und Rückkehr des Schalters in die skizzierte Ruhelage hebt die elastisch verformte erste Kontaktzunge Z1 wieder von der zweiten Kontaktzunge ab und trennt den Strompfad aus, so dass der Antrieb wieder stillgelegt wird.

Die Stielaufnahme SA ist als eine im wesentlichen zylindrische Einstecköffnungausgeführt. In die Stielaufnahme ragen rückwärtige Enden E1, E2 der Kontaktanordnung. Ein parallel zur Einsteckrichtung ER verschiebbares Sperrglied SP ragt in der ohne eingesetzten Stiel skizzierten Situation nach Fig. 1 durch den Boden EB der Stielaufnahme SA in die Einstecköffnung hinein. Das Sperrglied SP ist entgegen der Federkraft einer Sperrgliedfeder FP in Einsteckrichtung ER verschiebbar, wobei eine der Einstecköffnung abgewandt an dem Sperrglied ausgebildete Sperrzunge SZ zwischen die gegenüberstehenden Kontaktzungen geschoben wird. Eine solche Verschiebung des Sperrglieds SP erfolgt zwangsweise beim Einstecken eines Verlängerungsstiels in die Einstecköffnung.

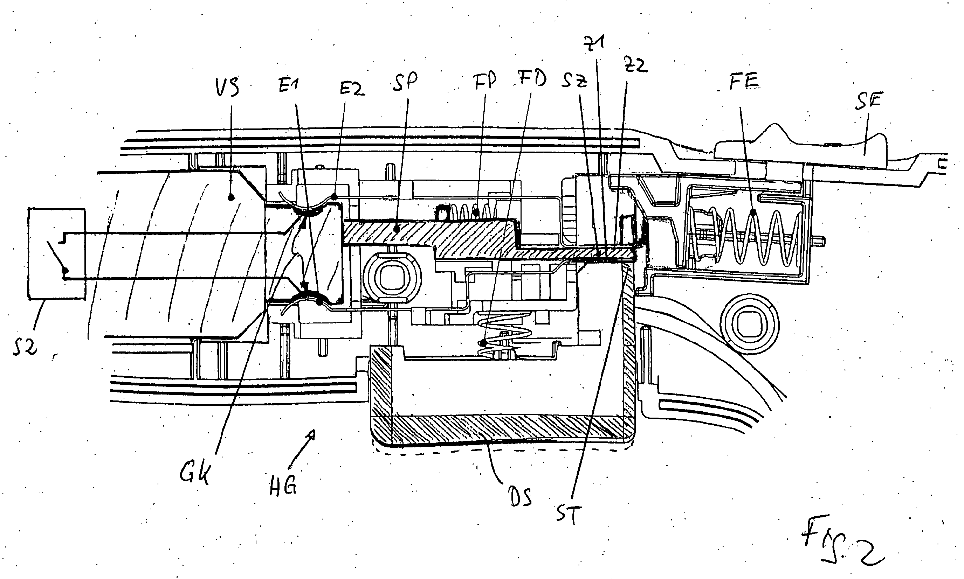

In Fig. 2 ist eine Situation mit eingestecktem Stiel skizziert. Die Einstecktiefe ist durch mechanischen Anschlag z.B. der Stielendfläche am Boden EB der Einstecköffnung oder vorzugsweise korrespondierender Stufen von Stiel und Einstecköffnung begrenzt. Das Sperrglied SP ist entgegen der Rückstellkraft der Feder FP verschoben, so dass die Sperrzunge SZ zwischen den Kontaktzungen Z1, Z2 liegt und den Start des Antriebs über die erste Schalteranordnung verhindert. Die Endbereiche E1, E2 der Kontaktanordnung liegen bei eingestecktem Stiel an Gegenkontakten GK des Stiels an. Die Gegenkontakte sind elektrisch mit einer zweiten Schalteranordnung, welche schematisch mit S2 angedeutet ist, im nicht dargestellten Griffbereich des Stiels verbunden. Bei eingestecktem Stiel kann der Antrieb durch Betätigen der zweiten Schalteranordnung gestartet werden.

Zugleich sei angenommen, dass der Benutzer versuche, bei eingeschaltetem Stiel den Druckschalter DS zu betätigen. Der Druckschalter kann dabei aber aus der in Fig. 1 dargestellten und in Fig. 2 mit unterbrochener Linie angedeuteten Ruhestellung nur um ein geringes Maß in die in Fig. 2 mit durchgezogenen Linien dargestellte Zwischenstellung gedrückt werden, in welcher der Schaltsteg ST die erste Kontaktzunge Z1 auf die isolierende Sperrzunge SZ und diese auf die zweite Kontaktzunge drückt und somit ein weiteres Eindrücken des Druckschalters verhindert ist

Wenn von dieser Situation ausgehend der Benutzer, nachdem er sich an das Erfordernis der Stielentfernung zum Start des Geräts über den Druckschalter erinnert, unter Beibehaltung der Betätigungskraft auf den Druckschalter DS den Verlängerungsstiel VS aus der Stielaufnahme entfernt, bleibt die Sperrzunge SZ zwischen den Kontaktzungen kraftschlüssig eingeklemmt und der Antrieb läuft nicht automatisch an. Erst bei Verringerung oder Wegfall der Betätigungskraft kehrt das Sperrglied unter der Einwirkung der Federkraft der Feder FP wieder in die Ausgangslage nach Fig. 1 zurück und das Gerät kann in gewohnter Weise gestartet werde.

Das Beibehalten der Sperrstellung nach Fig. 2 des Sperrglieds SP kann auch förmschlüssig erfolgen, indem ein mit dem Druckschalter verschobenes Halteglied einen Anschlag für das Sperrglied gegen ein Zurückgleiten' in dessen Ruhestellung bildet.

Für die Sperrung des Starts des Antriebs über die erste Schalteranordnung mittels eines Sperrglieds sind eine Vielzahl von Realisierungsmöglichkeiten gegeben.

Die Erfindung ist nicht auf das beschriebene Ausführungsbeispiel beschränkt, sondern im Rahmen fachmännischen Könnens in mancherlei Weise abwandelbar.

## Patentansprüche

1. Handhaltbares Gerät, insbesondere Garten-Schneidgerät, mit elektromotorischem Antrieb
- mit einem Gerätegehäuse
- mit einer in das Gerätegehäuse integrierten ersten Schalteranordnung zum Starten des Antriebs
- mit einer Stielaufnahme in dem Gerätegehäuse zum lösbaren Einsetzen eines Gerätestiels, welcher seinerseits eine zweite, von der Stielaufnahme entfernte Schalteranordnung zum Starten des Antriebs enthält
- mit Steuereinrichtungen, welche
a) bei in die Stielaufnahme eingesetztem Stiel ein Starten des Antriebs durch Betätigung der ersten Schalteranordnung verhindern,
b) ohne in die Stielaufnahme eingesetzten Stiel ein Starten des Antriebs durch Betätigen der ersten Schalteranordnung ermöglichen,
c) bei in die Stielaufnahme eingesetztem Stiel und Betätigung der ersten Schalteranordnung ein Starten des Antriebs über die erste Schalteranordnung erst nach Loslasse der ersten Schalteranordnung und Entnahme des Stiels aus der Stielaufnähme und erneutem Betätigen der ersten Schalteranordnung zulassen.

2. Gerät nach Anspruch 1, **dadurch gekennzeichnet, dass** die Steuereinrichtungen erste Mittel zur Sperrung der Stielentnahme bei Betätigung der ersten Schalteranordnung entsaften.

3. Gerät nach Anspruch 1 oder Anspruch 2, **dadurch gekennzeichnet, dass** die Steuereinrichtungen zweite Mittel enthalten, welche eine Veränderung der Stellung eines Betätigungselements der ersten Schalteranordnung aus einer Zwischenstellung in eine Endstellung und/oder einen über die erste Schalteranordnung schließbaren Strompfad zwischen einer Stromquelle und dem Antrieb sperren und die Sperre nach Entnahme des Stiels und Aufheben der Betätigung der ersten Schaltmittel freigeben.

4. Gerät nach Anspruch 3, **dadurch gekennzeichnet, dass** die zweiten Mittel mechanische Sperrmittel enthalten, welche bei eingesetztem Stiel eine Sperrstellung einnehmen und durch Betätigen der ersten Schalteranordnung in der Sperrstellung gehalten sind

5. Gerät nach Anspruch 4, **dadurch gekennzeichnet, dass** die mechanischen Sperrmittel eine Betätigung der ersten Schalteranordnung in eine Endstellung verhindern.

6. Gerät nach Anspruch 4 oder 5, **dadurch gekennzeichnet, dass** die mechanischen Sperrmittel zwischen relativ zueinander bewegliche Kontaktelemente eingreifen.

7. Gerät nach einem der Ansprüche 4 bis 6, **dadurch gekennzeichnet, dass** die mechanischen Sperrmittel durch die Betätigung der ersten Schalteranordnung kraftschlüssig in der Sperrstellung gehalten sind.

8. Gerät nach einem der Ansprüche 4 bis 6, **dadurch gekennzeichnet, dass** die mechanischen Sperrmittel durch Betätigen der ersten Schalteranordnung formschlüssig in der Sperrstellung gehalten sind.

9. Gerät nach einem der Ansprüche 1 bis 8, **dadurch gekennzeichnet, dass** die Streuereinrichtungen elektronische Sperrmittel enthalten, welche die Einsetzposition des Stiels und/oder die Betätigungsposition der ersten Schalteranordnung überwachen

## Claims

1. Handheld device, in particular gardening shears, with an electric-motor drive
- with a device housing,
- with a first switch arrangement, which is integrated in the device housing, for starting the drive
- with a handle receptacle in the device housing for releasably inserting a device handle, which for its part contains a second switch arrangement, which is at a distance from the handle receptacle, for starting the drive,
- with control devices, which
a) prevent starting of the drive as a result of actuation of the first switch arrangement when the handle is inserted into the handle receptacle,
b) enable starting of the drive by means of actuation of the first switch arrangement when the handle is not inserted into the handle receptacle,
c) permit starting of the drive via the first switch arrangement when the handle is inserted into the handle receptacle and on actuation of the first switch arrangement only once the first switch arrangement has been released and the handle has been removed from the handle receptacle and the first switch arrangement has been actuated again.

2. Device according to Claim 1, **characterized in that** the control devices contain first means for blocking the removal of the handle on actuation of the first switch arrangement.

3. Device according to Claim 1 or Claim 2,
**characterized in that** the control devices contain second means, which block a change in the position of an actuating element of the first switch arrangement from an intermediate position into an end position and/or a current path, which can be closed via the first switch arrangement, between a current source and the drive and release this blocking once the handle has been removed and the actuation of the first switching means has been cancelled.

4. Device according to Claim 3, **characterized in that** the second means contain mechanical blocking means, which assume a blocking position when the handle is inserted and are held in the blocking position by actuation of the first switch arrangement.

5. Device according to Claim 4, **characterized in that** the mechanical blocking means prevent an actuation of the first switch arrangement into an end position.

6. Device according to Claim 4 or 5, **characterized in that** the mechanical blocking means engage between contact elements which are capable of moving in relation to one another.

7. Device according to one of Claims 4 to 6,
**characterized in that** the mechanical blocking means are held in the blocking position in a force-fitting manner by the actuation of the first switch arrangement.

8. Device according to one of Claims 4 to 6,
**characterized in that** the mechanical blocking means are held in the blocking position in an interlocking manner by actuation of the first switch arrangement.

9. Device according to one of Claims 1 to 8, **characterized in that** the control devices contain electronic blocking means, which monitor the insertion position of the handle and/or the actuation position of the first switch arrangement.

## Revendications

1. Appareil portable à la main, notamment appareil de coupe pour jardinage, muni d'un mécanisme d'entraînement électromotorisé,
- comprenant un boîtier d'appareil,
- comprenant un arrangement de commutation intégré dans le boîtier d'appareil pour démarrer le mécanisme d'entraînement,
- comprenant un logement de manche dans le boîtier d'appareil pour y insérer de manière amovible un manche d'appareil qui comprend de son côté un deuxième arrangement de commutation à distance du logement de manche pour démarrer le mécanisme d'entraînement,
- comprenant des dispositifs de commande qui
a) lorsque le manche est inséré dans le logement de manche, empêchent un démarrage du mécanisme d'entraînement en actionnant le premier arrangement de commutation,
b) lorsque le manche n'est pas inséré dans le logement de manche, permettent un démarrage du mécanisme d'entraînement en actionnant le premier arrangement de commutation,
c) lorsque le manche est inséré dans le logement de manche et lors d'un actionnement du premier arrangement de commutation, n'autorisent un démarrage du mécanisme d'entraînement par le biais du premier arrangement de commutation qu'après avoir relâché le premier arrangement de commutation et retiré le manche du logement-de manche et ensuite actionné de nouveau le premier arrangement de commutation.

2. Appareil selon la revendication 1, **caractérisé en ce que** les dispositifs de commande contiennent des premiers moyens pour bloquer le retrait du manche lors de l'actionnement du premier arrangement de commutation.

3. Appareil selon la revendication 1 ou la revendication 2, **caractérisé en ce que** les dispositifs de commande contiennent des deuxièmes moyens qui empêchent une modification de la position d'un élément d'actionnement du premier arrangement de commutation depuis une position intermédiaire dans une position finale et/ou bloquent un passage électrique entre une source de courant et le mécanisme d'entraînement pouvant être fermé par le premier arrangement de commutation et suppriment le blocage après le retrait du manche et l'arrêt de l'actionnement du premier moyen de commutation.

4. Appareil selon la revendication 3, **caractérisé en ce que** les deuxièmes moyens contiennent des moyens de blocage mécaniques qui adoptent une position de blocage lorsque le manche est inséré et qui sont maintenus en position de blocage en actionnant le premier arrangement de commutation.

5. Appareil selon la revendication 4, **caractérisé en ce que** les moyens de blocage mécaniques empêchent un actionnement du premier arrangement de commutation dans une position finale.

6. Appareil selon la revendication 4 ou 5,
**caractérisé en ce que** les moyens de blocage mécaniques interviennent entre des éléments de contact mobiles l'un par rapport à l'autre.

7. Appareil selon l'une des revendications 4 à 6, **caractérisé en ce que** les moyens de blocage mécaniques sont maintenus par adhérence en position de blocage en actionnant le premier arrangement de commutation.

8. Appareil selon l'une des revendications 4 à 6, **caractérisé en ce que** les moyens de blocage mécaniques sont maintenus par engagement géométrique en position de blocage en actionnant le premier arrangement de commutation.

9. -Appareil selon l'une des revendications 1 à 8, **caractérisé en ce que** les dispositifs de commande contiennent des moyens de blocage électroniques qui surveillent la position d'insertion du manche et/ou la position d'actionnement du premier arrangement de commutation.
